# EUROPEAN PATENT APPLICATION

(11) **EP 4 808 164 A1**
(43) Date of publication of application: **16.09.2026**
(21) Application number: 24887734.2
(22) Date of filing: 18.10.2024
(51) Int. Cl.: H04W 4/02

(54) **PEOPLE FLOW DATA PROCESSING METHOD AND APPARATUS, DEVICE, AND MEDIUM**

(30) Priority: 07.11.2023 CN 202311479357
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: HOU, Weijia, Ningbo, Zhejiang 315899 (CN)
(74) Representative: Boult Wade Tennant LLP
(86) International application number: PCT/CN2024/125944
(87) International publication number: WO 2025/098121

(57) **Abstract**

A people-flow data processing method and apparatus, a device, and a medium disclosed in the present application relate to the field of data processing technologies and are applied to a data processing server in a data processing system. Precise monitoring of people flow and effective data analysis are achieved by acquiring a target signal sent by a mobile terminal device, where the target signal carries signal strength of at least one iBeacon signal received by the mobile terminal device, and the target signal carries a device identifier of a target iBeacon device that sends the iBeacon signal or device identifiers of target iBeacon devices that send iBeacon signals; determining, according to the signal strength of the at least one iBeacon signal, a distance between the mobile terminal device and each target iBeacon device; determining, according to the distance between the mobile terminal device and the each target iBeacon device, as well as a placing position of the each target iBeacon device in the target area, a current position of the mobile terminal device in the target area; and performing statistical analysis, based on the current position, on people-flow data in the target area, to obtain a people-flow data statistical result corresponding to a target area.

## Description

This application claims priority to Chinese Patent Application No. 202311479357.8, filed with the China National Intellectual Property Administration on November 07, 2023 and entitled "PEOPLE-FLOW DATA PROCESSING METHOD AND APPARATUS, DEVICE, AND MEDIUM", which is incorporated herein by reference in its entirety.

### TECHNICAL FIELD

Embodiments of the present application relate to, but are not limited to, the field of data processing technology, and in particular, to a people-flow data processing method and apparatus, a device, and a medium.

### BACKGROUND

Currently, indoor people-flow counting methods in popularity include infrared people-flow counting and video people-flow counting. Here, the infrared people-flow counting is to count the quantity of people based on the blocking of infrared mutual projection by the passing of a human body; and the video people-flow counting is to collect images of a counting area through cameras and then count the quantity of people based on the quantity of human heads in the images. Both of these indoor people-flow counting methods are mostly used at entrances where simple people-quantity counting is required. These methods can accumulate the total quantity of people passing through, but cannot distinguish between entry and exit. That is, they cannot perform bidirectional people-flow counting, but only count each passage once. Thus, it is impossible to obtain people-flow information accurately and in real-time, and conduct effective data analysis.

Therefore, there is an urgent need for a people-flow data processing solution that can obtain people-flow information accurately and in real-time, so as to achieve precise monitoring of people flow and effective data analysis.

### SUMMARY

The following is an overview of the subject matters described in detail herein. This overview is not intended to limit the protection scope of the claims.

The purpose of the present application is to provide a people-flow data processing method and apparatus, a device, and a medium, so as to achieve precise monitoring of people flow and effective data analysis.

In a first aspect, the present application provides a people-flow data processing method, applied to a data processing server in a data processing system, where the data processing system further includes a mobile terminal device and a plurality of iBeacon devices placed in a target area;
where the people-flow data processing method includes:
acquiring a target signal sent by the mobile terminal device, where the target signal carries signal strength of at least one iBeacon signal received by the mobile terminal device, and the target signal carries a device identifier of a target iBeacon device that sends the iBeacon signal or device identifiers of target iBeacon devices that send iBeacon signals;
determining, according to the signal strength of the at least one iBeacon signal, a distance between the mobile terminal device and each target iBeacon device;
determining, according to the distance between the mobile terminal device and the each target iBeacon device, as well as a placing position of the each target iBeacon device in the target area, a current position of the mobile terminal device in the target area; and
performing statistical analysis, based on the current position, on people-flow data in the target area, to obtain a people-flow data statistical result corresponding to the target area.

In a possible implementation, if a quantity of the at least one iBeacon signal is 1, the iBeacon signal is an iBeacon signal with strongest signal strength among iBeacon signals received by the mobile terminal device;
if the quantity of the at least one iBeacon signal is multiple, the iBeacon signals are multiple iBeacon signals with relatively strong signal strength among the iBeacon signals received by the mobile terminal device.

In a possible implementation, the quantity of the at least one iBeacon signal is 3, and the determining, according to the distance between the mobile terminal device and the each target iBeacon device, as well as the placing position of the each target iBeacon device in the target area, the current position of the mobile terminal device in the target area includes:
determining, based on a three-point positioning method and according to the distance between the mobile terminal device and the each target iBeacon device, as well as the placing position of the each target iBeacon device in the target area, the current position of the mobile terminal device in the target area.

In a possible implementation, a floor plan of the target area is divided into a plurality of grids with a set size, and the plurality of iBeacon devices are placed at positions corresponding to vertices of the grids.

In a possible implementation, the performing statistical analysis, based on the current position, on the people-flow data in the target area, to obtain the people-flow data statistical result corresponding to the target area includes:
determining a statistical dimension, where the statistical dimension includes at least one of people-flow density analysis, people-flow direction analysis, people-flow time-distribution analysis, and people-flow stay-time analysis, where the people-flow direction analysis is used for analyzing people-flow directions and paths based on movement trajectories of mobile terminal devices at different times; and
performing statistical analysis in the statistical dimension, based on the current position, on the people-flow data in the target area, to obtain the people-flow data statistical result corresponding to the target area in the statistical dimension.

In a possible implementation, after obtaining the people-flow data statistical result corresponding to the target area, the method further includes:
determining, among multiple types of preset visualization modes, a target visualization mode corresponding to the people-flow data statistical result; and outputting the people-flow data statistical result by using the target visualization mode;
where the visualization modes include: a heat map, through which, in the people-flow density analysis, a quantity of people is shown, where a darker color indicates a larger quantity of people; a timeline chart, through which, in the people-flow time-distribution analysis, change of people flow in a day is shown, where quantities of people in multiple time periods are displayed using a line chart or a bar chart; a scatter plot, through which, in the people-flow stay-time analysis, stay time of people in a set area is shown, where each point represents a person, a position of the point represents a position of the person, and colors or sizes of the point represent lengths of stay time; a network diagram, through which, in the people-flow direction analysis, sources and destinations of people flow are shown, where a point represents a location, a line represents a people flow, and widths of lines represent a quantity of people; a dashboard, used to integrate multiple types of data charts and display people-flow information in multiple dimensions at one time.

In a possible implementation, the determining, according to the signal strength of the at least one iBeacon signal, the distance between the mobile terminal device and the each target iBeacon device includes:
determining, based on a relationship between the signal strength and the distance and according to the signal strength of the at least one iBeacon signal, the distance between the mobile terminal device and the each target iBeacon device.

In a second aspect, the present application provides a people-flow data processing apparatus, applied to a data processing server in a data processing system, where the data processing system further includes a mobile terminal device and a plurality of iBeacon devices placed in a target area; where the people-flow data processing apparatus includes:
an acquiring module, configured to acquire a target signal sent by the mobile terminal device, where the target signal carries signal strength of at least one iBeacon signal received by the mobile terminal device, and the target signal carries a device identifier of a target iBeacon device that sends the iBeacon signal or device identifiers of target iBeacon devices that send iBeacon signals;
a first determining module, configured to determine, according to the signal strength of the at least one iBeacon signal, a distance between the mobile terminal device and each target iBeacon device;
a second determining module, configured to determine, according to the distance between the mobile terminal device and the each target iBeacon device, as well as a placing position of the each target iBeacon device in the target area, a current position of the mobile terminal device in the target area; and
an analyzing module, configured to perform statistical analysis, based on the current position, on people-flow data in the target area, to obtain a people-flow data statistical result corresponding to the target area.

In a possible implementation, if a quantity of the at least one iBeacon signal is 1, the iBeacon signal is an iBeacon signal with strongest signal strength among iBeacon signals received by the mobile terminal device; and if the quantity of the at least one iBeacon signal is multiple, the iBeacon signals are multiple iBeacon signals with relatively strong signal strength among the iBeacon signals received by the mobile terminal device.

In a possible implementation, the quantity of the at least one iBeacon signal is 3, and the second determining module is specifically configured to determine, based on a three-point positioning method and according to the distance between the mobile terminal device and the each target iBeacon device, as well as the placing position of the each target iBeacon device in the target area, the current position of the mobile terminal device in the target area.

In a possible implementation, a floor plan of the target area is divided into a plurality of grids with a set size, and the plurality of iBeacon devices are placed at positions corresponding to vertices of the grids.

In a possible implementation, the analyzing module is specifically configured to: determine a statistical dimension, where the statistical dimension includes at least one of people-flow density analysis, people-flow direction analysis, people-flow time-distribution analysis, and people-flow stay-time analysis, where the people-flow direction analysis is used for analyzing people-flow directions and paths based on movement trajectories of mobile terminal devices at different times; and
perform statistical analysis in the statistical dimension, based on the current position, on the people-flow data in the target area, to obtain the people-flow data statistical result corresponding to the target area in the statistical dimension.

In a possible implementation, the analyzing module is further configured, after obtaining the people-flow data statistical result corresponding to the target area, to: determine, among multiple types of preset visualization modes, a target visualization mode corresponding to the people-flow data statistical result; and output the people-flow data statistical result by using the target visualization mode;
where the visualization modes include: a heat map, through which, in the people-flow density analysis, a quantity of people is shown, where a darker color indicates a larger quantity of people; a timeline chart, through which, in the people-flow time-distribution analysis, change of people flow in a day is shown, where quantities of people in multiple time periods are displayed using a line chart or a bar chart; a scatter plot, through which, in the people-flow stay-time analysis, stay time of people in a set area is shown, where each point represents a person, a position of the point represents a position of the person, and colors or sizes of the point represent lengths of stay time; a network diagram, through which, in the people-flow direction analysis, sources and destinations of people flow are shown, where a point represents a location, a line represents a people flow, and widths of lines represent a quantity of people; a dashboard, used to integrate multiple types of data charts and display people-flow information in multiple dimensions at one time.

In a possible implementation, the first determining module is specifically configured to determine, based on a relationship between the signal strength and the distance and according to the signal strength of the at least one iBeacon signal, the distance between the mobile terminal device and the each target iBeacon device.

In a third aspect, the present application provides an electronic device, including:
a memory, configured to store computer-executable instructions;
a processor, configured to execute the computer-executable instructions to implement the people-flow data processing method according to any one in the first aspect.

In a fourth aspect, the present application provides a computer-readable storage medium, where computer-executable instructions are stored in the computer-readable storage medium, and when the computer-executable instructions are executed, the people-flow data processing method according to any one in the first aspect is implemented.

In a fifth aspect, the present application provides a computer program product, including a computer program, where, when the computer program is executed, the people-flow data processing method according to any one in the first aspect is implemented.

In a sixth aspect, the present application provides a data processing system, where the data processing system includes a plurality of iBeacon devices placed in a target area, a mobile terminal device, and a data processing server. Here, the data processing server is configured to execute the people-flow data processing method according to any one in the first aspect. Through the collaboration between these devices, precise monitoring of people flow and data analysis are achieved.

In a seventh aspect, the present application provides a computer program, where, when the computer program is running in a computer, the computer executes the method described in the first aspect.

A people-flow data processing method and apparatus, a device, and a medium provided in the present application are applied to a data processing server in a data processing system. Precise monitoring of people flow and effective data analysis are achieved by acquiring a target signal sent by a mobile terminal device, where the target signal carries signal strength of at least one iBeacon signal received by the mobile terminal device, and the target signal carries a device identifier of a target iBeacon device that sends the iBeacon signal or device identifiers of target iBeacon devices that send iBeacon signals; determining, according to the signal strength of the at least one iBeacon signal, a distance between the mobile terminal device and each target iBeacon device; determining, according to the distance between the mobile terminal device and the each target iBeacon device, as well as a placing position of the each target iBeacon device in the target area, a current position of the mobile terminal device in the target area; and performing statistical analysis, based on the current position, on people-flow data in the target area, to obtain a people-flow data statistical result corresponding to the target area.

Other aspects can be understood after reading and comprehending the accompanying drawings and the detailed description.

### BRIEF DESCRIPTION OF DRAWINGS

The accompanying drawings herein are incorporated into the specification and constitute a part of the specification, showing embodiments consistent with the present application, and are used together with the specification to explain the principles of the present application.
FIG. 1 is a flowchart of a specific people-flow data processing method provided in an embodiment of the present application.
FIG. 2a is a schematic diagram of a specific data frame format of an iBeacon device.
FIG. 2b is a schematic diagram of specific positions of iBeacon devices provided in an embodiment of the present application.
FIG. 3 is a schematic diagram of specific three-point positioning provided in an embodiment of the present application.
FIG. 4 is a schematic flowchart of performing statistical analysis, based on a current position, on people-flow data in a target area to obtain a corresponding people-flow statistical result, provided in an embodiment of the present application.
FIG. 5 is a schematic structural diagram of a people-flow data processing apparatus provided in an embodiment of the present application.
FIG. 6 is a schematic structural diagram of an electronic device provided in an embodiment of the present application.
FIG. 7 is a schematic structural diagram of a data processing system provided in an embodiment of the present application.

Through the above accompanying drawings, the specific embodiments of the present application have been shown, and there will be more detailed descriptions below. These accompanying drawings and text descriptions are not intended to limit the scope of the concept of the present application in any way, but to explain the concept of the present application to those skilled in the art by referring to specific embodiments.

### DESCRIPTION OF EMBODIMENTS

Exemplary embodiments will be described in detail here, and examples thereof are shown in the accompanying drawings. When the following description refers to the accompanying drawings, unless otherwise indicated, the same numbers in different accompanying drawings represent the same or similar elements. The implementations described in the following exemplary embodiments do not represent all implementations consistent with the present application. On the contrary, they are merely examples of apparatuses and methods consistent with some aspects of the present application as detailed in the appended claims.

It should be noted that the user information (including but not limited to user equipment information, user personal information, etc.) and data (including but not limited to data used for analysis, stored data, displayed data, etc.) involved in the present application are all information and data authorized by the user or fully authorized by all parties. Moreover, the collection, use, and processing of relevant data need to comply with relevant laws, regulations, and standards, and corresponding operation entrances are provided for users to choose to authorize or refuse.

Currently, customer-flow counting methods in popularity further include Wi-Fi probe customer-flow counting. The Wi-Fi probe customer-flow counting is to count the quantity of people by collecting mobile phone MAC addresses, which can count the quantity of consumers in a store according to mobile phones, and track the movement trajectories of consumers in the store and determine whether they are new or old customers according to the Internet Protocol of mobile phones.

However, the optional customer-flow counting methods have many drawbacks. For example, in the infrared customer-flow counting method, only people passing through the infrared radiation can be counted. Therefore, the infrared customer-flow counting method is prone to missing counts when multiple people pass through a relatively wide entrance at the same time. In the video customer-flow counting method, a large quantity of high-definition cameras need to be installed, which requires very high costs. The quantity of people is calculated by analyzing human heads through algorithms. In a large venue, the cost is very high, and the data transmission task is also heavy. Moreover, none of the optional customer-flow counting methods can accurately locate the indoor travel trajectory of people flow.

Based on the above, the present application provides a people-flow data processing method and apparatus, a device, and a medium, which can obtain people-flow information accurately and in real-time, and perform effective data analysis.

The technical solutions of the present application will be described in detail below with specific embodiments. The following specific embodiments may be combined with each other, and the same or similar concepts or processes may not be repeated in some embodiments. The embodiments of the present application will be described below with reference to the accompanying drawings.

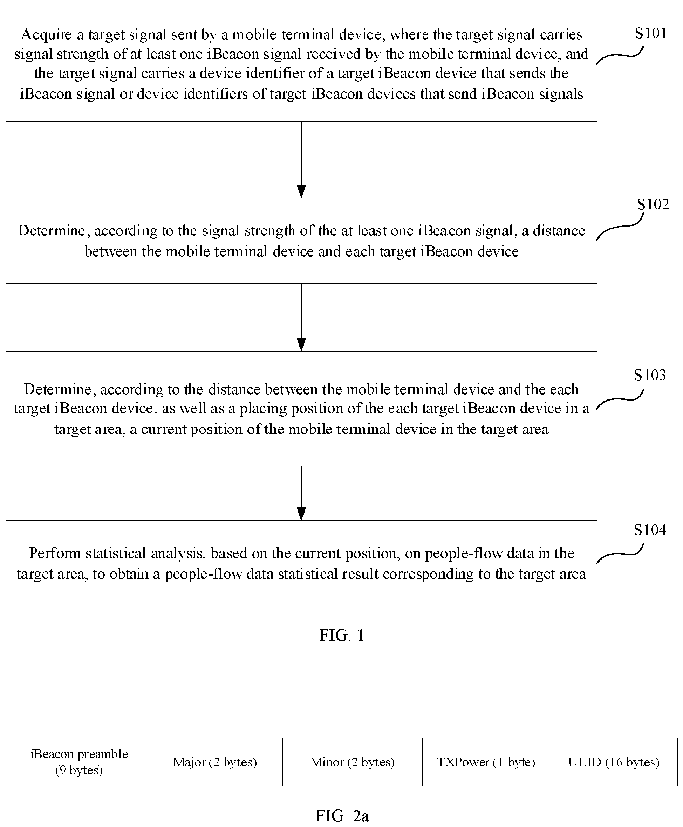

FIG. 1 is a flowchart of a specific people-flow data processing method provided in an embodiment of the present application. The method is applied to a data processing server in a data processing system, where the data processing system further includes a mobile terminal device and a plurality of iBeacon devices placed in a target area. As shown in FIG. 1, the people-flow data processing method includes the following.

S101: Acquire a target signal sent by the mobile terminal device, where the target signal carries signal strength of at least one iBeacon signal received by the mobile terminal device, and the target signal carries a device identifier of a target iBeacon device that sends the iBeacon signal or device identifiers of target iBeacon devices that send iBeacon signals.

Here, the iBeacon (iBeacon) device technology has been open-sourced, and its specific data frame format may be as shown in FIG. 2a. FIG. 2a is a schematic diagram of a specific data frame format of an iBeacon device. Here, the Major (Major) is an identity identifier of a group, which is 2 bytes, with a value range of 0~0xff, that is, a manufacturer has at most 2^16 groups; the Minor (Minor) is an identity identifier of a single iBeacon device, which is 2 bytes, with a value range of 0~0xff, that is, a group has at most 2^16 iBeacon devices; the transmit power (Transmit Power, referred to as TX Power for short) is 1 byte, which is the power strength of the transmitted signal of the iBeacon device, where the strength is a negative number, represented in two's complement; and the universally unique identifier (Universally Unique Identifier, referred to as UUID for short) represents the device identifier, which is 16 bytes, used to uniquely identify a specific device's mark or code, and is used to identify and distinguish devices in different scenarios. It should be noted that the device identifier should be unique to ensure that each device can be independently identified and distinguished, which can prevent confusion.

It is supplemented that the present application needs to assign a unique device identifier to each iBeacon device, and enter the position and device identifier of the iBeacon device into a device management platform. Here, assigning a unique device identifier is prior art, which will not be repeated here.

S102: Determine, according to the signal strength of the at least one iBeacon signal, a distance between the mobile terminal device and each target iBeacon device.

Optionally, the determining, according to the signal strength of the at least one iBeacon signal, the distance between the mobile terminal device and the each target iBeacon device may include: determining, based on a relationship between the signal strength and the distance and according to the signal strength of the at least one iBeacon signal, the distance between the mobile terminal device and the each target iBeacon device.

Optionally, the relationship between the signal strength of the iBeacon signal and the distance between the mobile terminal device and the each target iBeacon device may be calculated by the following formula: $d = {10}^{\left(TxPower-RSSI\right) / \left(10∗n\right)}$

Here, d represents the distance between the mobile terminal device and the each target iBeacon device; TxPower represents the signal strength of the iBeacon signal at a distance of 1 meter, which is usually provided by the manufacturer of the iBeacon signal; RSSI represents the signal strength of the iBeacon signal; n represents the environmental factor, which indicates the signal attenuation speed. Optionally, in an open space, n generally takes a value of 2, but in an indoor environment or in the presence of obstacles, actual measurement may need to be performed.

It should be noted that the above formula can only provide an approximate distance estimation, as the propagation of wireless signals is affected by many factors, such as obstacles and signal interference. Therefore, if more accurate distance measurement is required, more complex algorithms or additional hardware devices may be needed.

S103: Determine, according to the distance between the mobile terminal device and the each target iBeacon device, as well as a placing position of the each target iBeacon device in the target area, a current position of the mobile terminal device in the target area.

Here, after obtaining the distance between the mobile terminal device and the each target iBeacon device through step S102, and knowing the placing position of the each target iBeacon device in the target area, the current position of the mobile terminal device in the target area may be obtained according to the distance and the placing position based on a preset algorithm.

Optionally, it is also possible to form the movement trajectory of the mobile terminal device according to the current position of the mobile terminal device in the target area at different times, so as to achieve the positioning and trajectory analysis on people flow.

S104: Perform statistical analysis, based on the current position, on people-flow data in the target area, to obtain a people-flow data statistical result corresponding to the target area.

For example, based on the current position, combined with time information and the moving speed of the mobile terminal device, key indicators, such as the quantity of people, flow direction, and stay time of people flow, are statistically analyzed. Optionally, key indicators, such as the quantity of people, may further be stored and analyzed to generate corresponding reports and charts, thus providing an efficient solution for places that need people-flow management, such as shopping malls and exhibition halls.

In the embodiment of the present application, the data processing server acquires a target signal sent by the mobile terminal device, where the target signal carries signal strength of at least one iBeacon signal received by the mobile terminal device, and the target signal carries a device identifier of a target iBeacon device that sends the iBeacon signal or device identifiers of target iBeacon devices that send iBeacon signals; determines, according to the signal strength of the at least one iBeacon signal, a distance between the mobile terminal device and each target iBeacon device; determines, according to the distance between the mobile terminal device and the each target iBeacon device, as well as a placing position of the each target iBeacon device in the target area, a current position of the mobile terminal device in the target area; and performs statistical analysis, based on the current position, on people-flow data in the target area, to obtain a people-flow data statistical result corresponding to the target area. People-flow data statistical analysis is achieved based on iBeacon signals, and precise monitoring of people flow and effective data analysis are achieved by deploying a plurality of iBeacon devices in the target area.

On the basis of the above embodiment, in an implementation, if a quantity of the at least one iBeacon signal is 1, the iBeacon signal is an iBeacon signal with strongest signal strength among iBeacon signals received by the mobile terminal device. In another implementation, if the quantity of the at least one iBeacon signal is multiple, the iBeacon signals are multiple iBeacon signals with relatively strong signal strength among the iBeacon signals received by the mobile terminal device.

For example, the mobile terminal device in the target area needs to connect to iBeacon devices within 50m or even 100m. At interval times, e.g., every 30 seconds, at the same time the device identifier of the iBeacon signal with the strongest signal strength or the device identifiers of multiple iBeacon signals with relatively strong signal strength are obtained by screening the iBeacon signals and uploaded to a data storage server.

It is supplemented that the quantity of iBeacon signals and the interval time may be set according to requirements, which are not limited in the embodiment of the present application.

In the embodiment of the present application, the type of iBeacon signals received by the mobile terminal device is determined through the quantity of iBeacon signals. Thus, different requirements can be matched and the application scope of the solution provided in the present application can be expanded.

On the basis of the above embodiment, if the quantity of the at least one iBeacon signal is 3, the determining, according to the distance between the mobile terminal device and the each target iBeacon device, as well as the placing position of the each target iBeacon device in the target area, the current position of the mobile terminal device in the target area may further include: determining, based on a three-point positioning method and according to the distance between the mobile terminal device and the each target iBeacon device, as well as the placing position of the each target iBeacon device in the target area, the current position of the mobile terminal device in the target area.

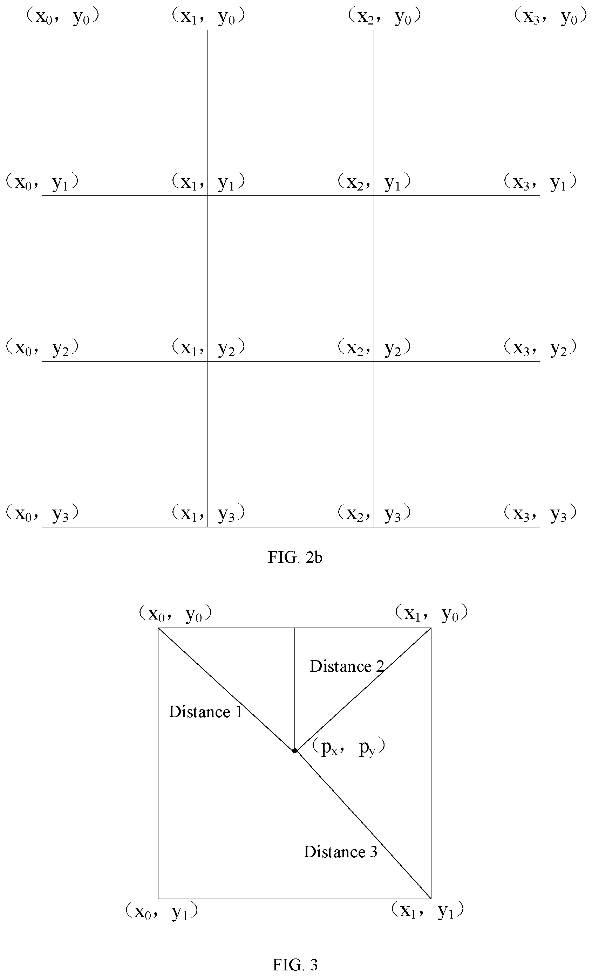

In addition, before performing three-point positioning, a floor plan of the target area is divided into a plurality of grids with a set size, and the plurality of iBeacon devices are placed at positions corresponding to vertices of the grids. Here, the specific size of a grid may be set according to requirements, which is not limited in the embodiment of the present application. As an example, assuming there is a 30m*30m site, and iBeacon devices are deployed in a grid with a spacing of 10m. One iBeacon device is placed at each grid vertex, requiring a total of 16 iBeacon devices. At this time, no matter where the user is in the target area, he/she will be in one of the 9 square grids (critical situations are not considered right now). The iBeacon signals from the 4 nearest iBeacon devices received by the mobile terminal device should be from the 4 vertices of the current square. Then, a plane coordinate system is established with the upper left corner as (0, 0). For the specific positions of the iBeacon devices, refer to FIG. 2b. FIG. 2b is a schematic diagram of specific positions of iBeacon devices provided in an embodiment of the present application.

FIG. 3 is a schematic diagram of specific three-point positioning provided in an embodiment of the present application. As shown in FIG. 3, assuming that the current user is in the first square at the upper left corner of FIG. 2b, according to the distance between the mobile terminal device and each target iBeacon device, the coordinates of the 3 nearest iBeacon devices on the floor plan of the target area are (x₀, y₀), (x₁, y₀), and (x₁, y₁), respectively, and the corresponding distances of the 3 iBeacon devices are distance 1, distance 2, and distance 3. The placing position of the mobile terminal device in the target area, that is, the coordinates (pₓ, p_{y}) of the mobile terminal device in the target area, may be obtained according to the trilateral relationship formula, thus the horizontal-axis coordinate and the vertical-axis coordinate of the mobile terminal device are calculated. After that, the horizontal and vertical coordinates of the target area grid in the entire floor plan grid of the target area are further respectively added to the horizontal-axis coordinate and the vertical-axis coordinate of the mobile terminal device, then the current position of the mobile terminal device in the target area is obtained. It is supplemented that the specific calculation principle for the distance between the mobile terminal device and each target iBeacon device is consistent with that in the above embodiment, which will not be repeated here.

In the embodiment of the present application, a specific implementation is provided for determining the current position of the mobile terminal device in the target area according to the distance between the mobile terminal device and each target iBeacon device, which can improve the accuracy of positioning the mobile terminal device.

Optionally, the present application may achieve the precise positioning of the mobile terminal device without through the three-point positioning method. Instead, it may scan a single iBeacon device and then take the position of the iBeacon device with the strongest signal strength as the current position of the mobile terminal device in the target area. However, the accuracy of this method may be reduced.

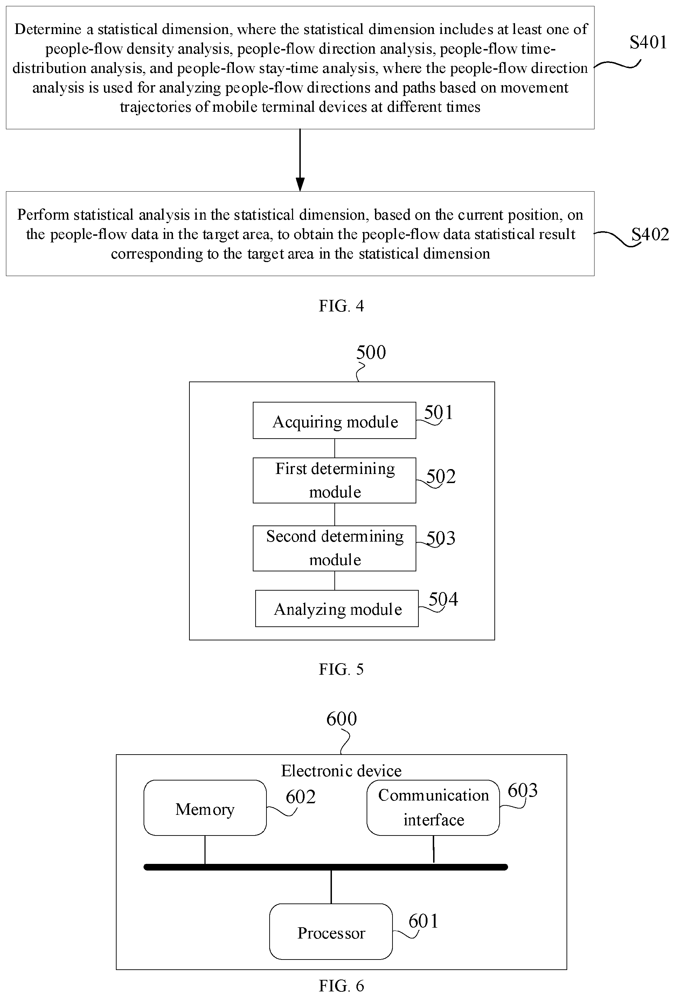

FIG. 4 is a schematic flowchart of performing statistical analysis, based on the current position, on people-flow data in the target area to obtain a corresponding people-flow statistical result, provided in an embodiment of the present application. As shown in FIG. 4, it includes the following.

S401: Determine a statistical dimension, where the statistical dimension includes at least one of people-flow density analysis, people-flow direction analysis, people-flow time-distribution analysis, and people-flow stay-time analysis, where the people-flow direction analysis is used for analyzing people-flow directions and paths based on movement trajectories of mobile terminal devices at different times.

Through the people-flow density analysis, the people-flow density in a specific area may be analyzed to identify which places are high people-flow areas and which places are low people-flow areas; through collecting and processing the movement trajectories of users, the main directions and paths of people flow can be obtained through analysis; through the people-flow time-distribution analysis, the quantity of people in each time period of a day may be summarized to reveal the time-distribution pattern of people flow and obtain the quantity of people in a specific area at a specific time; and through the people-flow stay-time analysis, the time when users enter and leave a certain area may be summarized to obtain the average stay time of people in the area through analysis.

It can be understood that in the present application, position information is continuously obtained through a positioning service on a mobile terminal device, a target area is defined as a people-flow observation area, the moving speed of the mobile terminal device is calculated by using the distance and time interval between adjacent position data, and then an effective moving speed threshold for the mobile terminal device is set according to an actual situation to exclude abnormal conditions. According to the change in moving speed and the positional relationship with the entry area, whether the moving direction is entering or leaving the area is determined. Based on the quantity of times each mobile terminal device enters or leaves the observation area within a target time period, the quantity of people is counted, events of entering and leaving are distinguished, and the net quantity of people is calculated, where the net quantity of people is the quantity of people entering minus the quantity of people leaving. Optionally, the people-flow stay time is calculated by recording the timestamp when the mobile terminal device first enters the target area and the timestamp when it leaves the target area. In a word, a data backend can calculate indicators in different statistical dimensions by combining time information and moving speeds of mobile terminal devices.

It is supplemented that the selection and calculation of the statistical dimensions may be set according to specific requirements, which are not limited in the present application. The above calculation manner in the aforesaid statistical dimensions is only an example.

S402: Perform statistical analysis in the statistical dimension, based on the current position, on the people-flow data in the target area, to obtain the people-flow data statistical result corresponding to the target area in the statistical dimension.

By performing statistical analysis on the people-flow data in the target area based on the current position to obtain the corresponding people-flow data statistical result, people-flow information can be accurately obtained, which is beneficial to the precise detection of people flow and effective data analysis.

On the basis of the above embodiment, after obtaining the people-flow summary corresponding to the target area, the people-flow data processing method may further include: determining, among multiple types of preset visualization modes, a target visualization mode corresponding to the people-flow data statistical result; and outputting the people-flow data statistical result by using the target visualization mode. Here, the visualization modes include: a heat map, through which, in the people-flow density analysis, a quantity of people is shown, where a darker color indicates a larger quantity of people; a timeline chart, through which, in the people-flow time-distribution analysis, change of people flow in a day is shown, where quantities of people in multiple time periods are displayed using a line chart or a bar chart; a scatter plot, through which, in the people-flow stay-time analysis, stay time of people in a set area is shown, where each point represents a person, a position of the point represents a position of the person, and colors or sizes of the point represent lengths of stay time; a network diagram, through which, in the people-flow direction analysis, sources and destinations of people flow are shown, where a point represents a location, a line represents a people flow, and widths of lines represent a quantity of people; a dashboard, used to integrate multiple types of data charts and display people-flow information in multiple dimensions at one time, such as the quantity of people, stay time, and direction.

In the embodiment of the present application, the people-flow data statistical result is output by using different types of visualization modes, which can intuitively display the people-flow data.

FIG. 5 is a schematic structural diagram of a people-flow data processing apparatus provided in an embodiment of the present application. The people-flow data processing apparatus provided in the embodiment of the present application is applied to a data processing server in a data processing system, where the data processing system further includes a mobile terminal device and a plurality of iBeacon devices placed in a target area. As shown in FIG. 5, the people-flow data processing apparatus 500 includes:
an acquiring module 501, configured to acquire a target signal sent by the mobile terminal device, where the target signal carries signal strength of at least one iBeacon signal received by the mobile terminal device, and the target signal carries a device identifier of a target iBeacon device that sends the iBeacon signal or device identifiers of target iBeacon devices that send iBeacon signals;
a first determining module 502, configured to determine, according to the signal strength of the at least one iBeacon signal, a distance between the mobile terminal device and each target iBeacon device;
a second determining module 503, configured to determine, according to the distance between the mobile terminal device and the each target iBeacon device, as well as a placing position of the each target iBeacon device in the target area, a current position of the mobile terminal device in the target area; and
an analyzing module 504, configured to perform statistical analysis, based on the current position, on people-flow data in the target area, to obtain a people-flow data statistical result corresponding to the target area.

In a possible implementation, if a quantity of the at least one iBeacon signal is 1, the iBeacon signal is an iBeacon signal with strongest signal strength among iBeacon signals received by the mobile terminal device; and if the quantity of the at least one iBeacon signal is multiple, the iBeacon signals are multiple iBeacon signals with relatively strong signal strength among the iBeacon signals received by the mobile terminal device.

In a possible implementation, the quantity of the at least one iBeacon signal is 3, and the second determining module 503 is specifically configured to determine, based on a three-point positioning method, and according to the distance between the mobile terminal device and the each target iBeacon device, as well as the placing position of the each target iBeacon device in the target area, the current position of the mobile terminal device in the target area.

In a possible implementation, a floor plan of the target area is divided into a plurality of grids with a set size, and the plurality of iBeacon devices are placed at positions corresponding to vertices of the grids.

In a possible implementation, the analyzing module 504 is specifically configured to: determine a statistical dimension, where the statistical dimension includes at least one of people-flow density analysis, people-flow direction analysis, people-flow time-distribution analysis, and people-flow stay-time analysis, where the people-flow direction analysis is used for analyzing people-flow directions and paths based on movement trajectories of mobile terminal devices at different times; and perform statistical analysis in the statistical dimension, based on the current position, on the people-flow data in the target area, to obtain the people-flow data statistical result corresponding to the target area in the statistical dimension.

In a possible implementation, the analyzing module 504 is further configured, after obtaining the people-flow data statistical result corresponding to the target area, to: determine, among multiple types of preset visualization modes, a target visualization mode corresponding to the people-flow data statistical result; and output the people-flow data statistical result by using the target visualization mode. Here, the visualization modes include: a heat map, through which, in the people-flow density analysis, a quantity of people is shown, where a darker color indicates a larger quantity of people; a timeline chart, through which, in the people-flow time-distribution analysis, change of people flow in a day is shown, where quantities of people in multiple time periods are displayed using a line chart or a bar chart; a scatter plot, through which, in the people-flow stay-time analysis, stay time of people in a set area is shown, where each point represents a person, a position of the point represents a position of the person, and colors or sizes of the point represent lengths of stay time; a network diagram, through which, in the people-flow direction analysis, sources and destinations of people flow are shown, where a point represents a location, a line represents a people flow, and widths of lines represent a quantity of people; a dashboard, used to integrate multiple types of data charts and display people-flow information in multiple dimensions at one time.

In a possible implementation, the first determining module 502 is specifically configured to determine, based on a relationship between the signal strength and the distance, and according to the signal strength of the at least one iBeacon signal, the distance between the mobile terminal device and the each target iBeacon device.

The people-flow data processing apparatus provided in the embodiment of the present application may execute the technical solutions shown in the above method embodiments, and their implementation principles and beneficial effects are similar, which will not be repeated here.

It should be noted that it should be understood that the division of the modules of the above apparatus is only a division of logical functions. In actual implementation, they may be fully or partially integrated into a physical entity, or may be physically separated. Moreover, these modules may all be implemented in the form of software called by processing elements; and they may also all be implemented in the form of hardware; or some modules may be implemented in the form of software run by processing elements, and some modules may be implemented in the form of hardware. For example, the processing module may be a separately established processing element, or it may be integrated into a certain chip of the above apparatus for implementation. In addition, it may also be stored in the memory of the above apparatus in the form of program code, and called and executed by a certain processing element of the above apparatus to realize the functions of the above processing module. The implementation of other modules is similar thereto. In addition, all or part of these modules may be integrated together or implemented independently. The processing element here may be an integrated circuit with signal processing capability. In the implementation process, each step of the above method or each module above may be completed by an integrated logic circuit of hardware in the processor element or through instructions in the form of software.

For example, the above modules may be one or more integrated circuits configured to implement the above methods, such as: one or more application specific integrated circuits (Application Specific Integrated Circuit, referred to as ASIC for short), or one or more microprocessors (Digital Signal Processor, referred to as DSP for short), or one or more field programmable gate arrays (Field Programmable Gate Array, referred to as FPGA for short). For another example, when one of the above modules is implemented in the form of program code through a processing element, the processing element may be a general-purpose processor, such as a central processing unit (Central Processing Unit, referred to as CPU for short) or other processors that can call a program code. For another example, these modules may be integrated together and implemented in the form of a system-on-a-chip (System-On-a-Chip, referred to as SOC for short).

FIG. 6 is a schematic structural diagram of an electronic device provided in an embodiment of the present application. As shown in FIG. 6, the electronic device 600 provided in the embodiment of the present application may include: a processor 601 and a memory 602, where
the memory 602 is configured to store computer-executable instructions;
the processor 601 is configured to execute the computer-executable instructions stored in the memory 602 to implement the people-flow data processing method described in the foregoing method embodiments.

It should be understood that the processor 601 may be a central processing unit (Central Processing Unit, referred to as CPU for short), and may also be other general-purpose processors, a digital signal processor (Digital Signal Processor, referred to as DSP for short), an application specific integrated circuit (Application Specific Integrated Circuit, referred to as ASIC for short), etc. A general-purpose processor may be a microprocessor, or the processor may also be any conventional processor, etc. The steps of the method disclosed in conjunction with the present application may be directly implemented by the execution of a hardware processor, or implemented by the combination of hardware and software modules in the processor. The memory 602 may include a high-speed random access memory (Random Access Memory, referred to as RAM for short), and may also further include a non-volatile memory NVM (non-volatile memory), such as at least one disk memory, and may also be a USB flash drive, a mobile hard disk, a read-only memory, a magnetic disk, or an optical disk, etc.

Optionally, the electronic device 600 may further include a communication interface 603. In a specific implementation, if the communication interface 603, the memory 602, and the processor 601 are implemented independently, the communication interface 603, the memory 602, and the processor 601 may be connected to each other through a bus to complete communication with each other. The bus may be an industry standard architecture (Industry Standard Architecture, referred to as ISA for short) bus, a peripheral component interconnect (Peripheral Component, referred to as PCI for short) bus, or an extended industry standard architecture (Extended Industry Standard Architecture, referred to as EISA for short) bus, etc. A bus may be divided into an address bus, a data bus, a control bus, etc., but it does not mean that there is only one bus or one type of buses.

Optionally, in a specific implementation, if the communication interface 603, the memory 602, and the processor 601 are integrated on a single chip, the communication for the communication interface 603, the memory 602, and the processor 601 may be achieved through an internal interface.

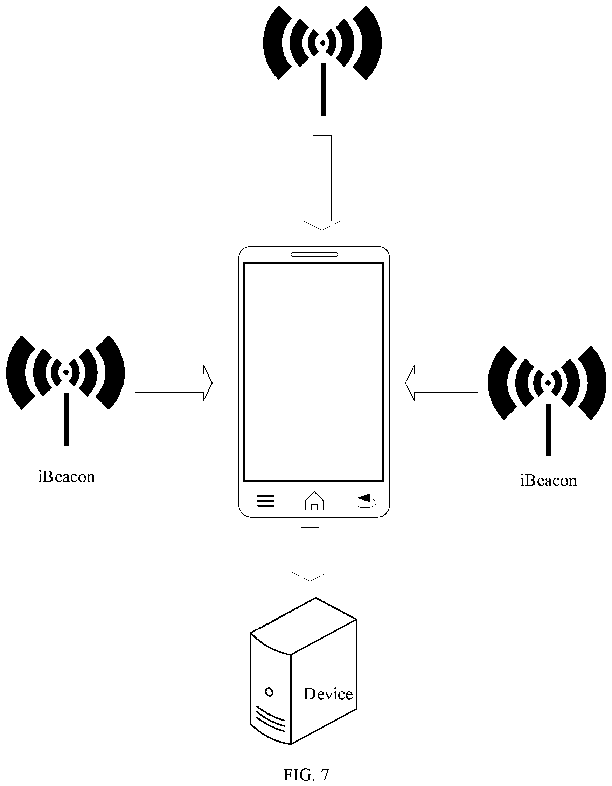

An embodiment of the present application further provides a data processing system. As shown in FIG. 7, the data processing system 700 includes a plurality of iBeacon devices 701 placed in a target area, a mobile terminal device 702, and a data processing server 703. Here, the data processing server 703 is configured to execute the people-flow data processing method described in any of the above method embodiments. Through the collaboration between these devices, precise monitoring of people flow and data analysis are achieved. Here, the target area may specifically be a place that requires people-flow management, such as a shopping mall or an exhibition hall.

An embodiment of the present application further provides a computer-readable storage medium, where computer-executable instructions are stored in the computer-readable storage medium, and when the computer-executable instructions are executed, the people-flow data processing method described in any of the foregoing embodiments is implemented.

It can be understood that the computer-readable storage medium may be implemented by any type of volatile or non-volatile storage device or a combination thereof, such as a static random access memory (Static Random Access Memory, referred to as SRAM for short), an electrically erasable programmable read only memory (Electrically Erasable Programmable Read Only Memory, referred to as EEPROM for short), an erasable programmable read only memory (Erasable Programmable Read Only Memory, referred to as EPROM for short), a programmable read only memory (Programmable Read Only Memory, referred to as PROM for short), a read only memory (Read Only Memory, referred to as ROM for short), a magnetic memory, a flash memory, a magnetic disk, or an optical disk. The readable storage medium may be any available medium that can be accessed by a general-purpose or special-purpose computer.

An exemplary computer-readable storage medium is coupled to a processor, enabling the processor to read information from the computer-readable storage medium and write information to the computer-readable storage medium. Of course, the computer-readable storage medium may also be an integral part of the processor. The processor and the computer-readable storage medium may be located in an ASIC. Of course, the processor and the computer-readable storage medium may also exist as discrete components in an electronic device.

The above-mentioned integrated modules implemented in the form of software function modules may be stored in a computer-readable storage medium. The above-mentioned software function modules are stored in a computer-readable storage medium, and include several instructions to enable an electronic device (which may be a personal computer, a server, or a network device, etc.) or a processor to execute some steps of the methods described in the embodiments of the present application.

An embodiment of the present application further provides a computer program product, including a computer program, where, when the computer program is executed, the people-flow data processing method described in any of the foregoing embodiments is implemented.

An embodiment of the present application further provides a computer program, where, when the computer program is run in a computer, the computer is caused to execute the steps of the methods in the above method embodiments. Their specific implementations and technical effects are similar, which will not be repeated here.

It should be noted that for the sake of simple description, the foregoing method embodiments are all expressed as a series of action combinations. However, those skilled in the art should know that the present application is not limited by the described action sequence, the reason is that according to the present application, some steps may be performed in other sequences or simultaneously. Moreover, those skilled in the art should also know that the embodiments described in the specification are all optional embodiments, and the involved actions and modules are not necessarily essential to the present application.

It should be further noted that although the steps in the flowchart are shown in sequence indicated by arrows, these steps are not necessarily executed in the sequence indicated by the arrows. Unless explicitly stated in the specification, the execution of these steps is not strictly limited in order, and these steps may be executed in other orders. Moreover, at least some of the steps in the flowchart may include multiple sub-steps or multiple stages. These sub-steps or stages are not necessarily executed at the same time; instead, they may be executed at different times. The execution order of these sub-steps or stages is also not necessarily sequential; instead, they may be executed alternately or in rotation with at least some of the other steps, sub-steps of the other steps, or stages.

In the above embodiments, each embodiment is described with its own emphasis. For the part not described in detail in a certain embodiment, reference may be made to the relevant descriptions in other embodiments. The technical features of the above embodiments may be combined arbitrarily. To make the description concise, not all possible combinations of the technical features in the above embodiments are described. However, as long as there is no contradiction in the combination of these technical features, they should be considered as falling within the scope recorded in the specification.

After considering the specification and practicing the invention disclosed herein, those skilled in the art will easily think of other implementations of the present application. The present application is intended to cover any modifications, uses, or adaptive changes of the present application. These modifications, uses, or adaptive changes follow the general principles of the present application and include common knowledge or conventional technical means in the technical field not disclosed in the present application. The specification and embodiments are only regarded as exemplary, and the true scope and spirit of the present application are indicated by the following claims.

It should be understood that the present application is not limited to the precise structures that have been described above and shown in the accompanying drawings, and various modifications and changes may be made without departing from its scope. The scope of the present application is only limited by the appended claims.

## Claims

1. A people-flow data processing method, applied to a data processing server in a data processing system, wherein the data processing system further comprises a mobile terminal device and a plurality of iBeacon devices placed in a target area;
wherein the people-flow data processing method comprises:
acquiring a target signal sent by the mobile terminal device, wherein the target signal carries signal strength of at least one iBeacon signal received by the mobile terminal device, and the target signal carries a device identifier of a target iBeacon device that sends the iBeacon signal or device identifiers of target iBeacon devices that send iBeacon signals;
determining, according to the signal strength of the at least one iBeacon signal, a distance between the mobile terminal device and each target iBeacon device;
determining, according to the distance between the mobile terminal device and the each target iBeacon device, as well as a placing position of the each target iBeacon device in the target area, a current position of the mobile terminal device in the target area;
performing statistical analysis, based on the current position, on people-flow data in the target area, to obtain a people-flow data statistical result corresponding to the target area.

2. The people-flow data processing method according to claim 1, wherein if a quantity of the at least one iBeacon signal is 1, the iBeacon signal is an iBeacon signal with strongest signal strength among iBeacon signals received by the mobile terminal device; or
if the quantity of the at least one iBeacon signal is multiple, the iBeacon signals are multiple iBeacon signals with relatively strong signal strength among the iBeacon signals received by the mobile terminal device.

3. The people-flow data processing method according to claim 2, wherein the quantity of the at least one iBeacon signal is 3, and the determining, according to the distance between the mobile terminal device and the each target iBeacon device, as well as the placing position of the each target iBeacon device in the target area, the current position of the mobile terminal device in the target area comprises:
determining, based on a three-point positioning method and according to the distance between the mobile terminal device and the each target iBeacon device, as well as the placing position of the each target iBeacon device in the target area, the current position of the mobile terminal device in the target area.

4. The people-flow data processing method according to any one of claims 1 to 3, wherein a floor plan of the target area is divided into a plurality of grids with a set size, and the plurality of iBeacon devices are placed at positions corresponding to vertices of the grids.

5. The people-flow data processing method according to any one of claims 1 to 3, wherein the performing statistical analysis, based on the current position, on the people-flow data in the target area, to obtain the people-flow data statistical result corresponding to the target area comprises:
determining a statistical dimension, wherein the statistical dimension comprises at least one of people-flow density analysis, people-flow direction analysis, people-flow time-distribution analysis, and people-flow stay-time analysis, wherein the people-flow direction analysis is used for analyzing people-flow directions and paths based on movement trajectories of mobile terminal devices at different times;
performing statistical analysis in the statistical dimension, based on the current position, on the people-flow data in the target area, to obtain the people-flow data statistical result corresponding to the target area in the statistical dimension.

6. The people-flow data processing method according to claim 5, wherein after obtaining the people-flow data statistical result corresponding to the target area, the method further comprises:
determining, among multiple types of preset visualization modes, a target visualization mode corresponding to the people-flow data statistical result; and outputting the people-flow data statistical result by using the target visualization mode;
wherein the visualization modes comprise: a heat map, through which, in the people-flow density analysis, a quantity of people is shown, where a darker color indicates a larger quantity of people; a timeline chart, through which, in the people-flow time-distribution analysis, change of people flow in a day is shown, wherein quantities of people in multiple time periods are displayed using a line chart or a bar chart; a scatter plot, through which, in the people-flow stay-time analysis, stay time of people in a set area is shown, wherein each point represents a person, a position of the point represents a position of the person, and colors or sizes of the point represent lengths of stay time; a network diagram, through which, in the people-flow direction analysis, sources and destinations of people flow are shown, wherein a point represents a location, a line represents a people flow, and widths of lines represent a quantity of people; a dashboard, used to integrate multiple types of data charts and display people-flow information in multiple dimensions at one time.

7. The people-flow data processing method according to any one of claims 1 to 3, wherein the determining, according to the signal strength of the at least one iBeacon signal, the distance between the mobile terminal device and the each target iBeacon device comprises:
determining, based on a relationship between the signal strength and the distance and according to the signal strength of the at least one iBeacon signal, the distance between the mobile terminal device and the each target iBeacon device.

8. A people-flow data processing apparatus, applied to a data processing server in a data processing system, wherein the data processing system further comprises a mobile terminal device and a plurality of iBeacon devices placed in a target area; wherein the people-flow data processing apparatus comprises:
an acquiring module, configured to acquire a target signal sent by the mobile terminal device, wherein the target signal carries signal strength of at least one iBeacon signal received by the mobile terminal device, and the target signal carries a device identifier of a target iBeacon device that sends the iBeacon signal or device identifiers of target iBeacon devices that send iBeacon signals;
a first determining module, configured to determine, according to the signal strength of the at least one iBeacon signal, a distance between the mobile terminal device and each target iBeacon device;
a second determining module, configured to determine, according to the distance between the mobile terminal device and the each target iBeacon device, as well as a placing position of the each target iBeacon device in the target area, a current position of the mobile terminal device in the target area;
an analyzing module, configured to perform statistical analysis, based on the current position, on people-flow data in the target area, to obtain a people-flow data statistical result corresponding to the target area.

9. An electronic device, comprising:
a memory, configured to store computer-executable instructions;
a processor, configured to execute the computer-executable instructions to implement the people-flow data processing method according to any one of claims 1 to 7.

10. A computer-readable storage medium, wherein computer-executable instructions are stored in the computer-readable storage medium, and when the computer-executable instructions are executed, the people-flow data processing method according to any one of claims 1 to 7 is implemented.

11. A computer program product, comprising a computer program, wherein, when the computer program is executed, the method according to any one of claims 1 to 7 is implemented.

12. A computer program, wherein, when the computer program is running in a computer, the computer executes the method according to any one of claims 1 to 7.
